**Europäisches Patentamt**

**European Patent Office**

**Office européen des brevets**

(19)

(11) Veröffentlichungsnummer : **0 380 487 B1**

(12)

# EUROPÄISCHE PATENTSCHRIFT

(45) Veröffentlichungstag der Patentschrift :
**16.09.92 Patentblatt 92/38**

(51) Int. Cl.⁵ : **G01N 1/28,** B01D 61/18

(21) Anmeldenummer : **88905668.5**

(22) Anmeldetag : **28.06.88**

(86) Internationale Anmeldenummer :
**PCT/DE88/00394**

(87) Internationale Veröffentlichungsnummer :
**WO 89/00285 12.01.89 Gazette 89/02**

(54) **VERFAHREN UND VORRICHTUNG ZUM KONZENTRIEREN MAKROMOLEKULARER LÖSUNGEN.**

(30) Priorität : **29.06.87 DE 3721847**

(43) Veröffentlichungstag der Anmeldung :
**08.08.90 Patentblatt 90/32**

(45) Bekanntmachung des Hinweises auf die
Patenterteilung :
**16.09.92 Patentblatt 92/38**

(84) Benannte Vertragsstaaten :
**AT BE CH DE FR GB IT LI LU NL SE**

(56) Entgegenhaltungen :
**DE-A- 2 546 500
FR-A- 2 553 005
US-A- 3 817 379
US-A- 4 123 224**

(73) Patentinhaber : **SIEGERT, Martin
Bergengruenstrasse 49
W-1000 Berlin 38 (DE)**

(72) Erfinder : **SIEGERT, Martin
Bergengruenstrasse 49
W-1000 Berlin 38 (DE)**

(74) Vertreter : **Maikowski, Michael, Dipl.-Ing. Dr. et
al
Patentanwälte Maikowski & Ninnemann
Xantener Strasse 10
W-1000 Berlin 15 (DE)**

EP 0 380 487 B1

Jouve, 18, rue Saint-Denis, 75001 PARIS

**Beschreibung**

Die Erfindung betrifft ein Verfahren nach dem Oberbegriff des Patentanspruchs 1 und Filter zur Durchführung des Verfahrens.

In der Publikation Nr. 1/130 F der AMICON Devision, W.R Grace & Co -AMICON GMBH Witten, wird ein im Handel erhältlicher Wegwerf-Ultrafilter zur statischen Konzentration kleiner Mengen makromolekularer Lösungen beschrieben. Dieser Ultrafilter weist acht getrennte, senkrecht stehenden Kammern auf, die zu verschiedenen Zeitpunkten für verschiedene Lösungen verwendet werden können. Die Kammern sind von senkrecht stehenden Membranen mit selektiver Permeabilität begrenzt. Auf der Rückseite dieser Membranen ist ein absorbierendes Material angeordnet. Dieses absorbierende Material saugt durch seine Kapillarwirkung die flüssige Phase aus den Lösungen in den Kammern heraus und in as absorbierende Material hinein. Dadurch werden in den, in den Kammern verbleibenden Lösungen die makromolekularen Bestandteile konzentriert. der Spiegel der Lösungen in den Kammern sinkt. Die Kammern sind mit Marken versehen, die den Grad der Konzentration anzeigen. Sobald in einer Kammer während der Konzentrierung die gewünschte Marke erreicht ist, wird die noch vorhandene Lösung mit dem makromolekularen Bestandteilen aus der Kammer abgezogen. Ein unterer Abschnitt der Membran ist impermeabel gemacht, um eine weitere Konzentration zu verhindern. Bei diesem bekannten Konzentrationsverfahren wird satz- oder chargenweise gearbeitet. Es erfolgt ein örtliches Eindicken einer stationären Lösung durch Absaugen der flüssigen Phase. Der Vorgang des Konzentrierens wird durch die Kapazität des saugenden Materials begrenzt. Sollen größere Lösungsmengen konzentriert werden, führt dies mit der bekannten Vorrichtung zu außerordentlich umständlichen Arbeitsweisen. Ein beliebig hoher Konzentrationsgrad kann nicht erreicht werden. Bei diesem Verfahren wird durch das Absaugen der flüssigen Phase durch die Membrane hindurch ein Teil der Makromoleküle an der Membrane abgelagert. Sie bleiben an dieser haften und gelangen bei weiterem Absinken der Lösung nicht in das Konzentrat. Durch diesen Substanzverlust wird die Effektivität des Konzentrationsverfahren irreversibel herabgesetzt.

In der US-A-46 32 761 wird in Spalte 1, Zeilen 37 bis 41 ausdrücklich darauf hingewiesen, daß bei dem im vorstehend beschriebenen Ultrafilter durch Oberflächenspannungen, die auf das Konzentrat im Bereich des impermeabel gemachten Abschnittes des Filters zusammen mit Kapillar-Saugkräften einwirken, eine völlige Trocknung der filtrierten Bestandteile erfolgt. Das Präparat wird dadurch unbrauchbar. Auf die Gefahr dieser Austrocknung wird vom Hersteller durch eine, den Ultrafiltern beigepackte Warnung hingewiesen.

Aus der US-A-4 123 224 sind ein Verfhraen und eine Vorrichtung zum Konzentrierten von Makromoleküle enthaltenden Lösungen bekannt. Die Lösung wird in eine von einem Filter begrenzten Konzentrierungsraum eingegeben. Auf der Filtratseite des Filters ist ein Absorbens angeordnet. Das Konzentrat wird in einem an den Konzentrationsraum anschließenden Konzentratraum gesammelt und die Filterfläche wird zum Konzentratraum hin kleiner. Das Konzentrat wird im gegenüber dem Filterbatt abgeschirmt liegenden Konzentrataum mit definiertem Endvolumen gesammelt.

Der Erfindung liegt die Aufgabe zugrunde, ein Verfahren und einem Filter zur Verfügung zu stellen, mit dem Lösungen mit optimaler Ausbeute auf eine vorgegebenes Maß bis zu 15 μl konzentriert werden können.

Erfindungsgemäß wird diese Aufgabe durch die Inhalte der Patentansprüche 1 und 10 gelöst.

Mit Vorteil wird in der Lösung ein einstellbarer Druck erzeugt, mit dem Lösungsmengen im Konzentrierungsraum durch das Filterblatt gedrückt werden. Die beim Absaugen auftretende Kapazitätsbegrenzung wird ausgeschaltet. Durch Wahl des einstellbaren Druckes und des Filtermaterials kann der Filtervorgang optimal eingestellt werden. In der Lösung wird in vorteilhafter Weise durch eine Filtration in einem Abschnitt des an sich gegenüber dem Filterblattes abgeschirmten Konzentratraumes unterhalb des Konzentrierungsraumes eine in diesen gerichtete Strömungskomponente erzeugt, durch die abgefilterte makromolekulare Bestandteile in diesen transportiert werden. Es ist nicht erforderlich, daß der Spiegel der Lösung im Konzentrierungsraum zum Konzentrieren abgesenkt und beobachtet wird, so daß auch die Gefahr einer Austrocknung ausgeschaltet werden kann. Es kann eine Konzentration, beispielsweise zur Durchführung einer präparativen Arbeit, erfolgen. Das Konzentrieren kann aber auch durchgeführt werden, um anschließend analytische Arbeiten durchzuführen, die nur mit höheren Konzentrationen die notwendige Genauigkeit ermöglichen.

In vorteilhafter Weise wird die Konzentrierung dadurch begünstigt, daß im Konzentrierungsraum die Lösung in diskreten, an einer Stelle an der Grenze zwischen Konzentrierungs-und Konzetratraum strahlenförmig zusammenlaufenden Bereichen durch das Filterblatt gedrückt wird. Dabei wird im Konzentrataum unterhalb dieser Stelle örtlich eine weitere Filtration durchgeführt, um die in diesem hineingerichtete Strömungskomponente zu erzeugen.

Das erfindungsgemäße Verfahren eröffnet die vorteilhafte Möglichkeit, die Lösung in zumindest einem Vorfilter größerer Kapazität vorzukonzentrieren. Die Vorkonzentrierung kann beispielsweise in kaskadenartig angeordneten Vorfiltern durchgeführt werden. Um den Konzentratraum gegenüber dem Filterblatt abzuschirmen und das Filterblatt in diesen Bereich inaktiv zu machen, wird mit Vorteil dieser zu inaktivierende Teilbereich des Filterblattes mittels einer Maske abgedeckt.

Da erfindungsgemäß die Lösung nicht durch das Filterblatt hindurch in ein saugendes Material gefördert wird, sondern durch das Filterblatt hindurchgedrückt wird, besteht die vorteilhafte Möglichkeit, das Filterblatt rückzuspülen, um am Filterblatt haftende makromolekulare Bestandteile von diesem zu lösen und dem Konzentrat zuzuführen. Ein besonders einfaches Verfahren besteht darin, das Auslaufniveau der flüssigen Phase aus dem Filter in entsprechender Weise anzuheben. Dadurch wird ein zum Filterungsdruckgradienten entgegengesetzer Druckgradient erzeugt.

Die Erfindung bietet die Möglichkeit, den einstellbaren Druck in der Lösung mittels eines feder- oder gewichtsbeaufschlagten oder pneumatisch, hydraulisch oder mittels eines Motors angetriebenen Kolbens oder einer Kolbenpumpe zu erzeugen.

Um die Sedimentation der abgefilteren Makromoleküle im Konzentrierungsraum - falls dieses gewünscht oder erforderlich ist - zu beschleunigen, wird mit Vorteil auf die Lösung zumindest im Konzentrierungsraum eine Zentrifugalkraft ausgeübt. Hierzu können eine Zentrifuge oder ein Pendel verwendet werde. Die Zentrifugalkraft kann mit Vorteil auch noch den einstellbaren Druck in der Lösung erzeugen. Hierzu wird beispielsweise in einer Dosiereinrichtung ein in der Lösung den Druck erzeugender, entsprechend bemessener Bauteil - insbesondere ein Kolben - durch Zentrifugalkraft beaufschlagt.

Eine vorteilhafte Ausführungsform eines Filters zur Durchführung des Verfahrens ist als Sandwich-Baugruppe ausgebildet. Die Sandwich-Baugruppe besteht aus einer Filterkammerscheibe in der ein offener Konzentrierungsraum ausgebildet ist, dessen Grundriß die Form eines Sechsecks mit zwei parallelen Seiten und zwei gleichschenkligen, konvergierenden Seitenpaaren aufweist und dessen durch das untere Seitenpaar gebildete Ecke mit einem Konzentratkanal verbunden ist. Mit der diametral gegenüberliegenden Ecke des Konzentrierungsraums ist ein Füllkanal verbunden. Ferner weist diese Sandwich-Baugruppe eine auf die Filterkammercheibe aufgelegte Maske aus hydrophobem Material auf und diese Maske hat mit dem Umriß des Konzentrierungsraumes und einem Abschnitt des Konzentratraums kongruente Aussparungen. Auf diese Maske ist ein Ultrafilterblatt aufgelegt. Weiterhin ist auf Filterkammerscheibe eine Filterstützscheibe aufgelegt, in der Kanäle für die flüssige Phase der Lösung ausgebildet sind.

Am unteren gleichschenkligen Seitenpaar des Konzentrierungsraumes kann das sich vor dem Filter in dieser Kammer sammelnde Material weiter abwärts in Richtung zum konzentratkanal gleiten. Das mit den oberen Enden der parallelen Seiten den Konzentrierungsraum verbundene gleichschenklige, konvergierende Seitenpaar ermöglicht auf einfache Weise das Abführen von Luft- oder Gasblasen, falls sich diese im Konzentrierungsraum bilden sollten.

Mit besonderem Vorteil ist am Rand des sechseckigen Konzentrierungsraumes und des mit diesem verbundenen Konzentratkanals eine Randwulst ausgebildet, die eine sichere Abdichtung des Konzentrierungsraumes und des Konzentratraumes am Filterblatt gewährleistet.

Um die Konzentrierung zu optimieren, nimmt die Tiefe des Konzentrierungsraumes vom Füllkanal zum Konzentratraum hin ab.

Damit die Austrittsspitze eines Dosierkolbens sicher aufgenommen werden kann, ist mit Vorteil der Füllkanal mit einem Luer-Lock-Verschluß ausgerüstet. Um die Abdichtung des Konzentrierungsraumes zu optimieren, ist auf der Filterstützscheibe ein den Randwulst an den Konzentrierungsraum und am Konzentratkanal überdeckender Andrucksockel ausgebildet. Dieser Andrucksockel weist im innerhalb des Randwulstes des Konzentrierungsraumes liegenden Flächenbereich wenigstens drei parallele, offene Kanäle auf. Diese offenen Kanäle münden mit ihren unteren Enden in einen, im innerhalb des Bereichs des Randwulstes des Konzentratkanals liegenden Flächenbereichs ausgebildeten, offenen Kanal, der seinerseits mit einem geschlossenen, innerhalb des Filterkammerkörpers ausgebildeten Abflusses verbunden ist. Der Andrucksockel drückt bei einem Zusammenspannen der Sandwich-Baugruppe ein eingelegtes Rechteckfilterblatt zur sicheren Abdichtung gegen den in der Filterkammerscheibe ausgebildeten Randwulst. Zur Fixierung der in die Sandwich-Baugruppe einzulegenden Elemente, beispielsweise des Filterblattes und/oder der Maske sind an der Filterkammerscheibe wenigstens zwei Fixierstifte ausgebildet, die in fluchtende Bohrungen in der Filterstützscheibe eingreifen.

Bei einer bevorzugten Ausführungsform weist die im vorstehenden beschriebene Filterkammerscheibe eine parallelepipedische, offene Aussparung auf, in deren Boden der Konzentrierungsraum und der Konzentratkanal ausgebildet sind. Die Filterstützscheibe ist mit einem, in die Aussparung passend einfügbaren, parallelepipedischen Steg ausgerüst, auf dessen Oberflächen der Andrucksockel angeordnet ist. Diese Ausführungsform gewährleistet auf einfachste Weise ein Zusammensetzen der Bauelemente der Sandwich-Baugruppe. Besondere Erfahrung oder Handfertigkeiten sind hierfür nicht erforderlich. Um beim Zusammenbau das Einlegen des Ultrafilters und nach der Filtrierung das Herausnehmem des Filterblattes und der Maske zu erleichtern, ist am oberen Ende der parallelepipedischen Aussparung in deren Seitenwände ein Paar Auswöl-

3

bungen ausgebildet, durch die eine Einlegen des Filterblattes die unter dem Filterblatt befindliche Luft ausströmen kann. Im Boden der parallelepipedischen Aussparung sind an deren offenem Ende zwei Nuten ausgebildet. In diese Nuten werden Hilfswerkzeuge eingeführt, um Filterblatt und Maske aus der Aussparung herauszuheben. Um die zusammengesetzte Sandwich-Baugruppe in diesem Zustand zu halten, sind in der Filterkammerscheibe und in der Filterstützscheibe mindestens zwei miteinander fluchtende Bohrungspaare ausgebildet, die eine Spanneinrichtung für die Sandwich-Baugruppe aufnehmen. Zum Einlegen der im vorstehenden beschriebenen Ausführungsbeispiele eines Filters in eine Zentrifuge ode eine andere, eine zusätzliche Schwerkraft erzeugende Vorrichtung, sind mit Vorteil die Filterkammerscheibe und die Filterstützscheibe als komplementäre Teilzylinder ausgebildet.

Ausführungbeispiele der Erfindung werden unter Bezugnahme auf die Fig. der Zeichnung erläutert.

Es zeigen:

Fig. 1 + 2 eine Draufsicht und eine Schnittansicht einer Ausführungsform der Filterkammerscheibe,

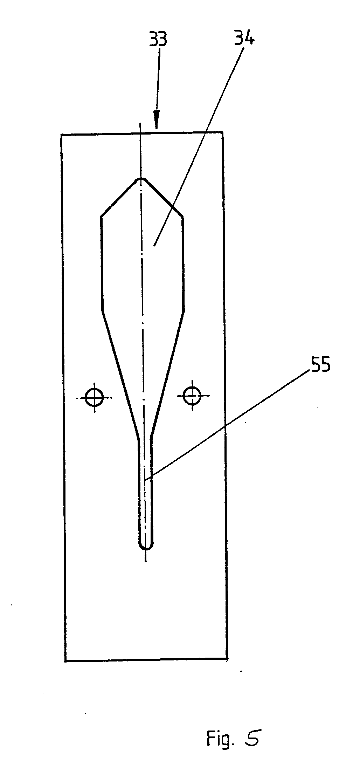

Fig. 3 + 4 eine Draufischt und eine Seitenansicht einer dazu passenden Filterstützscheibe,

Fig. 5 eine Draufsicht auf eine Maske

und

Fig. 6 eine Seitenansicht einer verspannten Sandwich-Baugruppe eines Filters

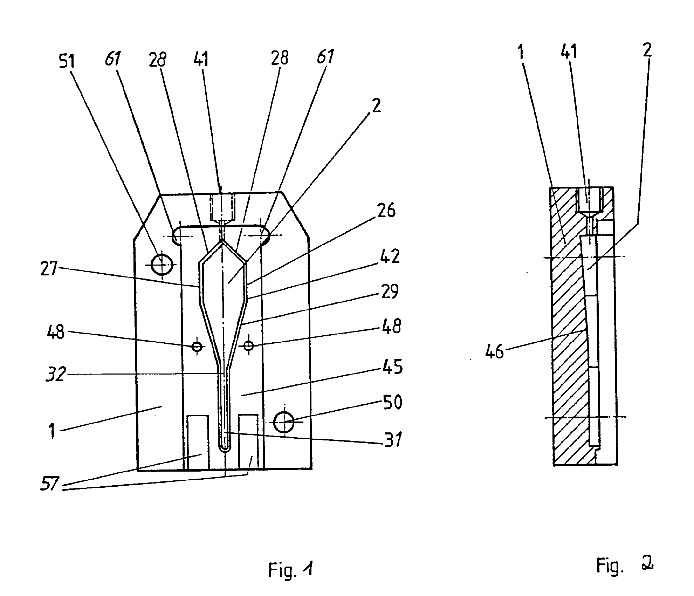

Die in Fig. 1 dargestellte Filterkammerscheibe 1 weist eine unten offene, parallelepipedische Aussparung 45 auf. Im Boden 46 dieser Aussparung 45 ist ein Konzentrierungsraum 2 ausgebildet, der einen sechseckigen Grundriss hat. Der Konzentrierungsraum 2 wird durch zwei parallele Seiten 26 und 27 begrenzt. An die oberen Enden dieser parallelen Seiten 26, 27 schließt sich ein gleichschenkliges Seitenpaar 28 an. Die von diesem Seitenpaar 28 gebildete Ecke des Konzentrierungsraumes 2 ist mit einem Füllkanal 41 verbunden, der mit einem Luer-Lock-Verschluß 43 ausgerüstet ist. An die unteren Enden der parallelen Seiten 26, 27 des Konzentrierungsraumes 2 schließt sich ein gleichschenkliges Seitenpaar 29 an. Vorzugsweise sind die Seitenlängen in diesem Seitenpaar 29 größer als die Seitenlängen im diametral gegenüberliegenden Seitenpaar 28. Die von dem nach unten konvergierenden Seitenpaar 29 gebildete Ecke des Konzentrierungsraumes 2 steht mit einem Konzentratkanal 31 in Verbindung, dessen unteres Ende abgeschlossen ist. Im Boden 46 der Aussparung 45 sind zu beiden Seiten des unteren Seitenpaares 29 des Konzentrierungsraums 2 Fixierstifte 48 für ein nicht dargestelltes rechteckiges Ultrafilterblatt und eine Maske angeordnet.

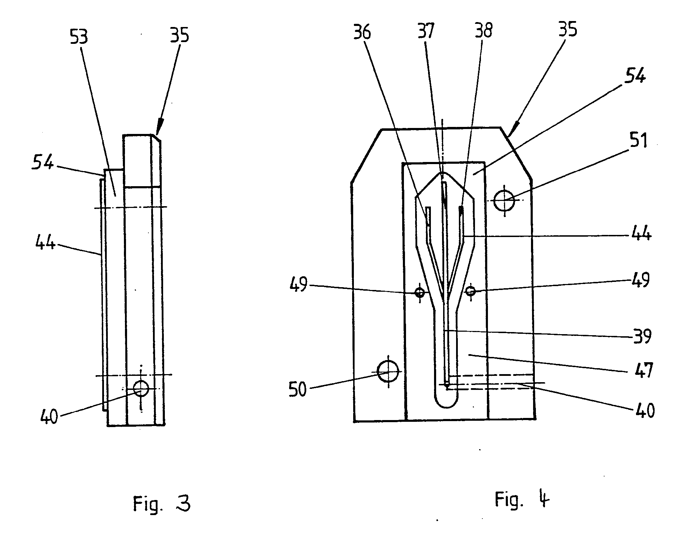

Wie Fig. 3 zeigt, weist die Filterstützscheibe 35 einen parallelepipedischen, in die Aussparung 45 der Filterkammerschiebe 1 mit Paßsizt einfügbaren Steg 53 auf. Auf der Oberseite 54 des Steges 53 ist ein Andrucksockel 44 ausgebildet, der im zusammengebauten zustand den Randwulst 42 in der Filterkammerscheibe 1 überdeckt. Der größer dimensionierte Umriß dieses Andrucksockels 44 ist konform zur Form des Randwulstes 42 ausgebildet. In diesem Andrucksockel 44 sind drei parallele, offene Kanäle 36, 37, 38 ausgebildet, deren untere Enden in einen Kanal 39 münden, der im zusammengebauten zustand dem Konzentratkanal 31 gegenüberliegt und mit diesem durch einen Filterblattabschnitt und einen Abschnitt der Maske getrennt ist. Die Kanäle 36, 37, 38, 39 sind oben offen. Der Kanal 39 ist mit einem geschlossene, im Körper der Filterstützscheibe 35 verlaufenden Abfluß 40 verbunden.

Die Filterkammerschiebe 1 und die Filterstützscheibe 35 weisen Bohrungspaare 51 auf, in die im zusammengebauten Zustand der Sandwich-Baugruppe eine Spannienrichtung eigesetzt wird, die die Filterkammerscheibe 1 und die Filterstützscheibe 35 zusammenpressen.

Zum zusammenbau der Sandwich-Baugruppe wird zunächst auf den Randwulst 42 die in Fig. 3 dargestellte, zur Aufhebung der Kapillarkraft aus hydrophobem Material hergestellte Maske 33 aufgelegt. Diese Maske 33 weist eine Aussparung Maske 34 auf, die kongruent mit den Seiten des Konzentrierungsraumes 2 und damit kongruent mit dem Randwulst 42 ist und am unteren Ende eine Aussparung 55 aufweist, die lediglich einen Abschnitt 32 des Konzentratkanals 31 abdeckt. Die Längendifferenz zwischen dieser Aussparung 55 und der Länge des Konzentratkanals 31 bestimmt das definierte Volumen.

Auf diese Maske 33 wird ein nicht dargestelltes rechteckiges Ultrafilterblatt aufgelegt, das durch die Fixierstifte 48 zentriert wird.

In einfacher Weise wird der Steg 53 der Filterstützscheibe 35 in die Aussparung 45 der Filterkammerscheibe 1 passend eingesetzt, wobei die Bohrungen 49 die Fixierstifte 48 aufnehmen.

Nunmehr kann die Sandwich-Baugruppe unter Verwendung des Bohrungsspaares 51 zusammengepreßt werden.

Über den Luer-Lock-Verschluß 43 wird unter Druck die Lösung in den Konzentrierungsraum 2 eingegeben und durch das zwischen dem Randwulst 42 der Filterkammerscheibe 1 und dem Andrucksockel 44 der Filterstützscheibe 35 zusammengedrückten, nicht dargestellten Filterblattes in die Kanäle 36, 37, 38 gedrückt. Die im Konzentratraum des Konzentrierungsraum 2 abgefilterten Makromoleküle sinken in dem Konzentrierungsraum 2 nach unten und gleiten weiter längs des konvergierenden Seitenpaares 29 abwärts. Im Abschnitt 32 des Konzentratkanals 31 findet noch eine Filtrierung statt. Dadurch wird im Sammelbereich der nach unten sinkenden Makromoleküle eine in den Konzentratkanal 31 gerichtete Strömungskomponente erzeugt, durch die diese Makromoleküle zusätzlich zur Schwerkraft in den Konzentratkanal 31 transportiert werden. Falls beim Konzentrieren sich Makromoleküle auf dem Filterblatt festsetzen sollten, kann das mit dem Abfluß 40 in Verbindung stehende Austrittsniveau ausreichend angehoben werden, um am Filterblatt einen entgegengesetzten Druckgradienten zu erzeugen, durch den die Makromoleküle vom Filterblatt abgehoben und in den Konzentrierungsraum 2 zurückgeführt werden, in dem sie dann nach unten sinken können.

Wie Fig. 1 zeigt, sind am oberen Ende der Aussparung 45 in deren Seitenwandungen zwei Auswölbungen 61 vorgesehen, durch die Luft beim Einlegen eines rechteckigen Filterblattes entweichen kann. Am unteren Ende sind am Boden 46 der Aussparung 45 zwei Nuten 57 ausgebildet. Ein in diese Nuten eingesetztes Hilfswerkzeug kann nach Beendigung des Abfilterns die Maske und das Filterblatt herausheben.

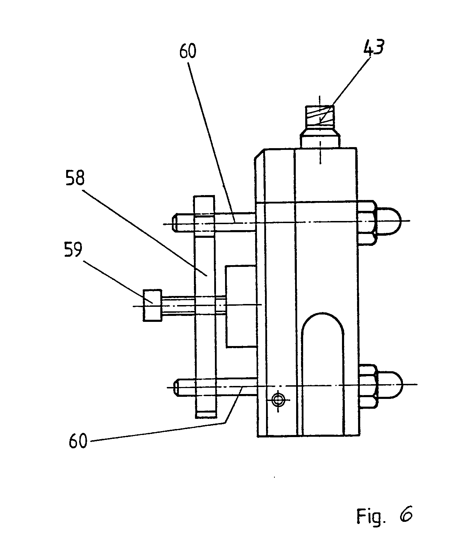

Wie Fig. 6 zeigt, sind in die vorstehend beschriebenen Bohrungen 51 Spannzapfen 60 eingesetzt, die einen Spannsteg 58 tragen, in den eine Spannschraube 59 eingeschraubt ist, mit der die Teile der Sandwich-Baugruppe zusammengepreßt werden.

Nach Beendigung der Konzentration wird das Konzentrat aus dem Konzentratkanal 31, beispielsweise mittels einer über den Füllkanal 41 eingeführten Kanüle, abgezogen.


### Patentansprüche

1. Verfahren zum Konzentrieren von Makromoleküle enthaltenen Lösungen, insbesondere Lösungen von Proteinmolekülen, auf ein definiertes Endvolumen, bei dem

1. die Lösung in einen, von einem ebenen Filterblatt begrenzten Konzentrierungsraum mit zu einem Konzentratraum hin kleiner werdender Filterfläche eingegeben wird, in dem

2. Lösungsmengen durch den Filter gedrückt werden, und

3. das Konzentrat in dem an den Konzentrierungsraum anschließenden Konzentratraum gesammelt wird,

dadurch gekennzeichnet, daß

4. in einem, in einem gegenüber dem Filter-blatt abgeschirmte und einem gegenüber dem Filter nicht abgeschirmten Bereich unterteilten Konzentratraum durch eine fortgesetzte Filtration im nicht abgeschirmten Bereich unterhalb des Konzentrierungsraumes eine in den Konzentratraum gerichtete Strömungskomponente erzeugt wird, durch die abgefilterte makromolekulare Bestandteile in diesen transportiert werden.

2. Verfahren nach Anspruch 1,

dadurch gekennzeichnet, daß

5. im Konzentrierungsraum die Lösung durch das Filterblatt mit einstellbaren Druck gedrückt und das Filtrat in diskreten, an einer Stelle an der Grenze zwischen Konzentrierungs- und Konzentratraum strahlenförmig zusammenlaufenden Bereichen gesammelt wird.

3. Verfahren nach Anspruch 2,

dadurch gekennzeichnet, daß

5.1. unterhalb dieser Stelle örtlich eine weitere Filtration durchgeführt wird.

4. Verfahren nach mindestens einem der Ansprüche 1 bis 3,

dadurch gekennzeichnet, daß

6. die Lösung in zumindest einem Vorfilter größerer Kapazität vorkonzentriert wird.

5. Verfahren nach mindestens einem der Ansprüche 1 bis 4,

dadurch gekennzeichnet, daß

4.1 der Konzentrierungsraum sowie der gegenüber dem Filterblatt abzuschirmende Teil des Konzentratraumes mittels einer Maske aus hydrophobem Material abgedichtet und abgegrenzt wird.

6. Verfahren nach mindestens einem der Ansprüche 1 bis 5,

dadurch gekennzeichnet, daß

7. das Filterblatt rückgespült wird.

7. Verfahren nach mindestens einem der Ansprüche 1 bis 6,

dadurch gekennzeichnet, daß

7.1 bei druckfreiem Konzentrierungsraum ein dem Filterdruckgradienten entgegengerichteter Filtrat-Druckgradient erzeugt wird.

8. Verfahren nach mindestens einem der Ansprüche 1 bis 7,
dadurch gekennzeichnet, daß
5.2 der einstellbare Druck in der Lösung mittels eines feder- oder gewichtsbeaufschlagten oder pneumatisch, hydraulisch oder mittels eines Motors angetriebenen Kolbens oder einer Kolbenpumpe erzeugt wird.

9. Verfahren nach mindestens einem der ansprüche 1 bis 8,
dadurch gekennzeichnet, daß
8. zumindest im Konzentrierungsraum auf die Lösung eine Zentrifugalkraft ausgeübt wird.

10. Verfahren nach mindestens einem der Ansprüche 1 bis 7 und 9,
dadurch gekennzeichnet, daß
5.3 der einstellbare Druck durch eine Zentrifugalkraft erzeugt wird.

11. Filter zur Durchführung des Verfahrens nach mindestens einem der Ansprüche 1 bis 10,
gekennzeichnet, durch
eine Sandwich-Baugruppe bestehend aus
1. einer Filterkammerscheibe (1) in der ein offener Konzentrierungsraum (2) ausgebildet ist,
1.1 dessen Grundriß die Form eines Sechsecks mit zwei parallelen Seiten (26, 27) und zwei gleichschenkligen, konvergierenden Seitenpaaren (28, 29) aufweist, und
1.2 dessen durch das untere Seitenpaar (29) gebildete Ende mit einem Konzentratkanal (31) verbunden ist,
2. einer auf die Filterkammerscheibe (1) aufgelegten Maske (33) aus hydrophobem Material mit einer mit dem Umriß (26, 27, 28, 29) des Konzentrierungsraumes (2) und einem Abschnitt (32) des Konzentratkanals (31) kongruenten Aussparung (34, 35),
3. einem auf die Maske (33) aufgelegtes Ultrafilterblatt und
4. einer auf die Filterkammerscheibe (1) aufgelegten Filterstützscheibe (35)
4.1 in der Kanäle (36 bis 40) für die flüssige Phase der Lösung ausgebildet sind.
5. einem mit der diametral gegenüberliegenden Ecke des Konzentrierungsraumes (2) verbundenen Einfüllungskanal (41),

12. Filter nach Anspruch 11,
dadurch gekennzeichnet, daß
1.3 am Rand des sechseckigen Konzentrierungsraumes (2) und des mit diesem verbundenen Konzentratkanals (31) eine Randwulst (42) ausgebildet. ist.

13. Filter nach Anspruch 13,
dadurch gekennzeichnet, daß
1.4.1 der Füllkanal (41) mit einem Luer-Lock- Verschluß (43) ausgerüstet ist.

14. Filter nach mindestens einem der Ansprüche 11 bis 13,
dadurch gekennzeichnet, daß
1.4. die Tiefe des Konzentrierungsraumes (2) vom Füllkanal (41) zum Konzentratkanal (31) hin abnimmt.

15. Filter nach mindestens einem der Ansprüch 11 bis 14,
dadurch gekennzeichnet, daß
4.2 auf der Filterstützscheibe (35) ein den Randwulst (42) am Konzentrierungsraum (2) und am Konzentratkanal (31) überdeckender Andrucksockel (44) ausgebildet ist, der
4.2.1 im innerhalb des Randwulstes (42) des Konzentrierungsraumes (2) liegenden Flächenbereichs wenigstens drei parallele, offene Kanäle (36 bis 38) aufweist, die
4.2.2 in einen, im innerhalb des Randwulstes (42) des Konzentratkanals (31) liegenden Flächenbereichs ausgebildeten offenen Kanal (39) münden, der mit einem geschlossenen Kanal (40) verbunden ist.

16. Filter nach mindestens einem der Ansprüche 11 bis 15,
dadurch gekennzeichnet, daß

6

1.5 die Filterkammerscheibe (1) wenigstens zwei Fixierstifte (48) und
4.3 die Filterstützscheibe (35) wenigstens zwei mit diesen fluchtende Bohrungen (49) aufweisen.

17. Filter nach mindestens einem der Ansprüche 11 bis 16,
    dadurch gekennzeichnet, daß
    1.6 die Filterkammerscheibe (1) eine parallelepipedische, offene Aussparung (45) aufweist, in deren Boden (46) der Konzentrierungsraum (2) und der Konzentratkanal (31) ausgebildet sind, und daß
    4.4 die Filterstützscheibe (35) mit einem in die Aussparung (45) passend einfügbaren, parallelepipedischen Steg (53) ausgerüstet ist, auf
    4.4.1 dessen Oberfläche (47) der Andrucksockel (44) angeordnet ist.

18. Filter nach Anspruch 17,
    dadurch gekennzeichnet, daß
    1.6.1 am oberen Ende der parallelepipedischen Aussparung (45) zwei Auswölbungen (61) und
    1.6.2 in deren Boden (46) am offenen Ende zwei Nuten (57) ausgebildet sind.

19. Filter nach mindestens einen der Ansprüche 11 bis 18,
    dadurch gekennzeichnet, daß
    5. in der Filterkammerscheibe (1) und in der Filterstützscheibe (35) mindestens zwei miteinander fluchtende Bohrungspaare (50, 51) ausgebildet sind, die eine Spanneinrichtung (58 bis 60) für die Sandwich-Baugruppe aufnehmen.

20. Filter nach mindestens einem der Ansprüch 11 bis 19,
    dadurch gekennzeichnet, daß
    die Filterkammerscheibe (1) und die Filterstützscheibe (9, 35) als komplementäre Teilzylinder ausgebildet sind.

21. Filter nach mindestens einem der Ansprüche 11 bis 20,
    dadurch gekennzeichnet, daß
    der Konzentratraum (4, 31) gegenüber dem Filterblatt (8) mittels einer Folie oder Maske (5, 33) aus Teflon abgeschirmt ist.

22. Filter nach Anspruch 21,
    dadurch gekennzeichnet, daß
    die Folie oder Maske (5, 33) aus Teflon eine Dicke im Bereich von 0,25 mm bis 0,75 mm, insbesondere von 0,5 mm aufweist.

**Claims**

1. Process for concentrating solutions containing macromolecules, more particularly solutions of protein molecules, to a defined end volume wherein
   1. the solution is introduced into a concentration chamber defined by a flat filter leaf and having a filter surface which becomes smaller towards a concentrate chamber, wherein
   2. quantities of solution are pressed through the filter, and
   3. the concentrate is collected in the concentrate chamber adjoining the concentration chamber, characterised in that
   4. a flow component directed into the concentrate chamber is produced in a concentrate chamber divided into an area screened from the filter leaf and an area not screened from the filter, through a continued filtration in the non-screened area underneath the concentration chamber, and filtered-off macromolecular constituents are transported through the flow component in same.

2. Process according to claim 1
   characterised in that
   5. in the concentration chamber the solution is pressed through the filter leaf with adjustable pressure and the filtrate is collected in discrete areas which converge in rays at a point at the boundary between the concentration and concentrate chambers.

3. Process according to claim 1

characterised in that
5.1 a further filtration is carried out locally beneath this point.

4. Process according to at least one of claims 1 to 3
characterised in that
6. the solution is first concentrated in at least one preliminary filter of larger capacity.

5. Process according to at least one of claims 1 to 4
characterised in that
4.1 the concentration chamber as well as the part of the concentrate chamber to be screened from the filter leaf are sealed and demarcated by means of a mask of hydrophobic material.

6. Process according to at least one of claims 1 to 5
characterised in that
7. the filter leaf is flushed through in reverse.

7. Process according to at least one of claims 1 to 6
characterised in that
7.1 in the case of a pressure-free concentration chamber a filtrate pressure gradient is produced which is directed against the filter pressure gradient.

8. Process according to at least one of claims 1 to 7
characterised in that
5.2 the adjustable pressure in the solution is produced by means of a spring- or weight-biased or pneumatically, hydraulically or motor-driven piston or piston pump.

9. Process according to at least one of claims 1 to 8
characterised in that
8. a centrifugal force is exerted on the solution at least in the concentration chamber.

10. Process according to at least one of claims 1 to 7 and 9
characterised in that
5.3 the adjustable pressure is produced through a centrifugal force.

11. Filter for carrying out the process according to at least one of claims 1 to 10 characterised by
a sandwich assembly consisting of
1. a filter chamber disc (1) incorporating an open concentration chamber (2),
1.1 whose basic outline is shaped like a hexagon with two parallel sides (26,27) and two pairs (28,29) of converging isosceles sides, and
1.2 whose end formed by the lower pair of sides (29) is connected to a concentrate channel (31),
2. a mask (33) of hydrophobic material placed on the filter chamber disc (1) and provided with a recess (34,55) which is congruent with the outline (26,27,28,29) of the concentration chamber (2) and a section (32) of the concentrate channel (31),
3. an ultrafilter leaf placed on the mask (33) and
4. a filter support disc (35) placed on the filter chamber disc (1),
4.1. and containing channels (36 to 40) for the fluid phase of the solution,
5. a filling channel (41) connected to the diametrically opposite corner of the concentration chamber (2).

12. Filter according to claim 11
characterised in that
1.3 an edge bead (42) is formed at the edge of the hexagonal concentration chamber (2) and the concentrate channel (31) connected thereto.

13. Filter according to claim 12
characterised in that
1.4.1 the filling channel (4) is fitted with a Luer-lock closure.

14. Filter according to at least one of claims 1 to 13

characterised in that

1.4 the depth of the concentration chamber (2) decreases from the filling channel (41) to the concentrate channel (31).

**15.** Filter according to at least one of claims 11 to 14
characterised in that

4.2 a contact pressure socket (44) is formed on the filter support disc (35) and covers the edge bead (42) on the concentration chamber (2) and on the concentrate channel (31),

4.2.1 the contact pressure socket has in the flat surface area lying inside the edge bead (42) of the concentration chamber (2) at least three parallel open channels (36 to 38), and

4.2.2 these channels open into an open channel (39) which is formed in the flat surface area lying inside the edge bead (42) of the concentrate channel (1) and which is connected to the closed channel (40).

**16.** Filter according to at least one of claims 11 to 15
characterised in that

1.5 the filter chamber disc (1) has at least two fixing pins (48) and

4.3 the filter support disc (35) has at least two bores (49) which are aligned therewith.

**17.** Filter according to at least one of claims 11 to 16
characterised in that

1. 6 the filter chamber disc (1) has a parallelepipedic open recess (45) whose base (46) incorporates the concentration chamber (2) and the concentrate channel (31), and that

4.4 the filter support disc (35) is fitted with a parallelepipedic web (53) which can be inserted with close fit into the recess (45), and

4.4.4 the contact pressure socket (44) is mounted on the surface (47) of the web.

**18.** Filter according to claim 17
characterised in that

1.6.1 two outward curvatures (61) are formed at the upper end of the parallelepipedic recess (45), and

1.6.2 two grooves (57) are formed in the base (46) of the curvatures at the open end.

**19.** Filter according to at least one of claims 11 to 18
characterised in that

5. at least two pairs of bores (50,51) are formed aligned with each other in the filter chamber disc (1) and in the filter support disc (35) wherein these bores hold a tension device (58 to 60) for the sandwich assembly.

**20.** Filter according to at least one of claims 11 to 19
characterised in that

the filter chamber disc (1) and the filter support disc (9,35) are designed as complementary partial cylinders.

**21.** Filter according to at least one of claims 11 to 20
characterised in that

the concentrate chamber (4,31) is screened from the filter leaf (8) by means of a foil or mask (5,33) of teflon.

**22.** Filter according to claim 21
characterised in that

the filter or mask (5,33) of teflon has a thickness in the area of 0.25 mm to 0.75 mm, more particularly of 0.5 mm.

**Revendications**

1.- Procédé pour concentrer des solutions contenant des macromolécules, en particulier des solutions de molécules de protéine jusqu'à un volume final défini, dans lequel:

(1) la solution est introduite depuis une chambre de concentration délimitée par une feuille de filtre plane, dans une chambre de concentré à surface de filtre réduite, où

(2) les quantités dissoutes sont pressées par le filtre, et

(3) le concentré est rassemblé dans la chambre de concentré qui suit la chambre de concentration, caractérisé en ce que:

(4) l'on crée, dans une chambre de concentré subdivisée, à l'intérieur d'une zone couverte par la feuille de filtre et d'une zone non couverte par le filtre, à l'aide d'une filtration poursuivie dans la zone non couverte en-dessous de la chambre de concentration, une composante d'écoulement dirigée dans la chambre de concentré, grâce à laquelle les parties contenant les macromolécules filtrées sont transportées.

2.- Procédé selon la revendication 1, caractérisé en ce que:

(5) dans la chambre de concentration, la solution est pressée à travers la feuille de filtre sous une pression réglable et le filtrat est rassemblé dans des zones discrètes selon des écoulements communs en forme de jets en un emplacement situé à la frontière entre la chambre de concentration et la chambre de concentré.

3.- Procédé selon la revendication 2, caractérisé en ce que:

(5.1) l'on réalise localement, en-dessous de cet emplacement, une filtration supplémentaire.

4.- Procédé selon au moins l'une des revendications 1 à 3, caractérisé en ce que:

(6) la solution est préconcentrée dans au moins un préfiltre de plus grande capacité.

5.- Procédé selon au moins l'une des revendications 1 à 4, caractérisé en ce que:

(4.1) la chambre de concentration ainsi que la partie de la chambre de concentré à recouvrir par la feuille de filtre est étanchée et délimitée par un masque en matériau hydrophobe.

6.- Procédé selon au moins l'une des revendications 1 à 5, caractérisé en ce que:

(7) la feuille de filtre est lavée à contre-courant.

7.- Procédé selon au moins l'une des revendications 1 à 6, caractérisé en ce que:

(7.1) lorsque la chambre de concentration est dépressurisée, on crée un gradient de pression de filtrat dirigé en sens inverse du gradient de pression de filtre.

8.- Procédé selon au moins l'une des revendications 1 à 7, caractérisé en ce que:

(5.2) on crée la pression réglable dans la solution à l'aide d'un piston sollicité élastiquement ou par la pesanteur ou par voie pneumatique, hydraulique ou à l'aide d'un moteur, ou à l'aide d'une pompe à piston.

9.- Procédé selon au moins l'une des revendications 1 à 8, caractérisé en ce que:

(8) au moins dans la chambre de concentration, on exerce sur la solution une force centrifuge.

10.- Procédé selon au moins l'une des revendications 1 à 7 et 9, caractérisé en ce que:

(5.3) on crée la pression réglable à l'aide d'une force centrifuge.

11.- Filtre pour la mise en oeuvre du procédé selon au moins l'une des revendications 1 à 10, caractérisé par un groupe assemblé en sandwich, se composant de:

(1) un disque de chambre de filtre (1) dans lequel est formé une chambre de concentration (2) ouverte,

(1.1) dont le contour présente la forme d'un hexagone à deux côtés parallèles (26, 27) et à deux paires de côtés inclinées du même angle et convergentes (28, 29), et

(1.2) dont l'extrémité formée par la paire inférieure de côtés (29) est reliée à un canal de concentré (31);

(2) un masque (33) en matériau hydrophobe, disposé sur le disque de chambre de filtre (1), muni d'une découpe (34, 55) congruente avec le contour (26, 27, 28, 29) de la chambre de concentration (2) et avec un tronçon (32) du canal de concentré (31);

(3) une feuille d'ultra-filtre posée sur le masque (33); et

(4) un disque de support de filtre (35) posé sur le disque de chambre de filtre (1),

(4.1) dans lequel sont formés des canaux (36 à 40) pour la phase liquide de la solution;

(5) un canal de remplissage (41) relié au coin diamétralement opposé de la chambre de concentration (2).

12.- Filtre selon la revendication 11, caractérisé en ce que:

(1.3) au bord de la chambre de concentration hexagonale (2) et du canal de concentré (31) relié à celui-ci, est formé un bourrelet de bordure (42).

13.- Filtre selon la revendication 12, caractérisé en ce que:

(1.4.1) le canal de remplissage (41) est équipé d'une fermeture à "écluse Luer" (43).

14.- Filtre selon au moins l'une des revendications 11 à 13, caractérisé en ce que:

(1.4) la profondeur de la chambre de concentration (2) décroît du canal de remplissage (41) vers le canal de concentré (31).

15.- Filtre selon au moins l'une des revendications 11 à 14, caractérisé en ce que:

(4.2) sur le disque de support de filtre (35) est formé un socle de pressage (44) recouvrant le bourrelet de bordure (42) sur la chambre de concentration (2) et sur le canal de concentré (31), qui

(4.2.1) comporte sur la zone surfacique se trouvant à l'intérieur du bourrelet de bordure (42) de la chambre de concentration (2), au moins trois canaux parallèles ouverts (36 à 38) qui

(4.2.2) débouchent dans un canal ouvert (39) formé dans une zone surfacique située à l'intérieur du bourrelet de bordure (42) du canal de concentré (31), et qui est relié à un canal fermé (40).

16.- Filtre selon au moins l'une des revendications 11 à 15, caractérisé en ce que:

(1.5) le disque de chambre de filtre (1) comporte au moins deux tiges ou tétons de fixation (48); et

(4.3) le disque de support de filtre (35) comporte au moins deux alésages (49) ajustés sur ces tiges.

17.- Filtre selon au moins l'une des revendications 11 à 16, caractérisé en ce que:

(1.6) le disque de chambre de filtre (1) comporte une découpe parallélépipédique ouverte (45) dans le corps (56) de laquelle sont formées la chambre de concentration (2) et le canal de concentré (31), et en ce que,

(4.4) le disque de support de filtre (35) est équipé d'une branche parallélépipédique (53) insérable de façon ajustée dans la découpe (45), et sur

(4.4.1) la surface (47) de laquelle est disposé le socle de pressage (44).

18.- Filtre selon la revendication 17, caractérisé en ce que sont formés:

(1.6.1) à l'extrémité supérieure de la découpe parallélépipédique (45), deux évasements (61), et

(1.6.2) dans le fond (46) de cette découpe, à l'extrémité ouverte, deux rainures (57).

19.- Filtre selon au moins l'une des revendications 11 à 18, caractérisé en ce que:

(5) sont formées sur le disque de chambre de filtre (1) et sur le disque de support de filtre (35) au moins deux paires d'alésages (50, 51) en correspondance l'une, l'autre, qui recouvrent un dispositif de serrage (58 à 60) pour le groupe assemblé en sandwich.

20.- Filtre selon au moins l'une des revendications 11 à 19, caractérisé en ce que le disque de chambre de filtre (1) et le disque support de filtre (9, 35) sont réalisés sous la forme de cylindres partiels complémentaires.

21.- Filtre selon au moins l'une des revendications 11 à 20, caractérisé en ce que la chambre de concentré (4, 31) est isolé par rapport à la feuille de filtre à l'aide d'un feuil ou masque (5, 33) en téflon.

22.- Filtre selon la revendication 21, caractérisé en ce que le feuil ou masque (5, 33) en téflon présente une épaisseur comprise entre 0,25 et 0,75 mm, en particulier de 0,5 mm.

Fig. 1

Fig. 2

Fig. 3

Fig. 4

33    34

55

Fig. 5

Fig. 6